# EUROPEAN PATENT APPLICATION

(11) **EP 4 596 630 A1**
(43) Date of publication of application: **06.08.2025**
(21) Application number: 23871441.4
(22) Date of filing: 01.08.2023
(51) Int. Cl.: C08L 83/07, C08F 2/50, C08F 290/06, C08L 83/05

(54) **HEAT-CURABLE AND PHOTOCURABLE SILICONE COMPOSITION, AND METHOD FOR PRODUCING CURED PRODUCT THEREOF**

(30) Priority: 28.09.2022 JP 2022154360
(71) Applicant: SHIN-ETSU CHEMICAL CO., LTD., Tokyo 1000005 (JP)
(72) Inventor: TOYOSHIMA Takeharu, Annaka-shi, Gunma 379-0224 (JP); OZAI Toshiyuki, Annaka-shi, Gunma 379-0224 (JP)
(74) Representative: Mewburn Ellis LLP
(86) International application number: PCT/JP2023/028117
(87) International publication number: WO 2024/070199

(57) **Abstract**

This heat-curable and photocurable silicone composition comprises:
(A) an organopolysiloxane having at least three (meth)acrylic groups per molecule;
(B) an organopolysiloxane having at least two alkenyl groups per molecule and having no (meth)acrylic group;
(C) an organohydrogen polysiloxane having at least two hydrosilyl groups per molecule;
(D) a hydrosilylation reaction catalyst; and
(E) a photopolymerization initiator,
wherein the ratio of the number of (meth)acrylic groups in the component (A) to the number of alkenyl groups in the composition is 0.9-3.0, and
the ratio of the number of hydrosilyl groups to the number of alkenyl groups is 0.8-1.2. The heat-curable and photocurable silicone composition makes it possible to easily manage a first stage of curing and a second stage of curing separately.

## Description

### TECHNICAL FIELD

This invention relates to a thermo/photo-curable silicone composition and a method for preparing a cured product thereof. More particularly, it relates to a liquid silicone composition of two-stage cure type which undergoes hydrosilation reaction by heating in the presence of a hydrosilation reaction catalyst and a photopolymerization initiator to reach a semi-cured state, and radical cure by UV to reach a completely cured state.

### BACKGROUND ART

Liquid silicone materials of two-stage cure type are attractive in that their preparation procedure can be managed in division. In the case of an encapsulant layer for optical devices, for example, it is necessary to strictly manage the degree of dispersion of phosphor because the efficiency of light extraction varies with the degree of dispersion of phosphor. When a heat-curable material is used as the encapsulant, however, the matrix lowers its viscosity in the heat-curing step, allowing the phosphor to settle down. It is then difficult to conduct the management of the degree of dispersion and the cure at the same time. When a material of two-stage cure type is used in the encapsulant layer, the primary cure enables to manage the degree of dispersion of phosphor at a certain level and the secondary cure enables to increase the hardness to the desired level so that the material can be mounted on the semiconductor device.

To contribute to the facilitation of the preparation process which is otherwise difficult and the development of a novel preparation process different from the prior ones, silicone materials of two-stage cure type are proposed in a wide range of applications including encapsulating materials for optical devices and temporary fixing agents for electronic equipment members as well as adhesives. Active research works are devoted thereon.

Patent Document 1 describes a liquid silicone composition comprising an alkenyl group-containing organopolysiloxane, a platinum catalyst for hydrosilation reaction, and a platinum catalyst adapted to be activated with high-energy radiation. By subjecting the composition to a normal temperature to elevated temperature environment to perform primary cure through addition reaction, thereby forming a thermoplastic silicone having no fluidity in normal temperature environment, then irradiating high-energy radiation to the thermoplastic silicone, and subjecting the silicone to an environment at normal temperature to elevated temperature to effect further hydrosilation reaction, there is obtained a silicone cured product having a high hardness.

Patent Document 2 describes a liquid silicone adhesive composition comprising an alkenyl group-containing organopolysiloxane, a hydrosilation reaction catalyst, and a thermal radical reaction initiator. By subjecting the composition to an environment at room temperature to 100°C to achieve a first stage of cure via addition reaction, obtaining a silicone cured product, then subjecting the silicone cured product to an environment at a higher temperature (typically 150 to 190°C) than the curing temperature in the first stage to achieve a second stage of cure via thermal radical reaction, there is obtained a silicone cured product having a higher hardness.

Patent Document 3 describes a liquid silicone adhesive composition comprising a condensation reactive group-containing organopolysiloxane, an alkenyl group-containing organopolysiloxane, a condensation reaction catalyst, and a thermal radical reaction initiator. By effecting condensation reaction in the presence of moisture to achieve a first stage of cure, forming a silicone cured product, subjecting the silicone cured product to a heated environment to achieve a second stage of cure via thermal radical reaction, there is obtained a silicone cured product having a higher hardness.

Meanwhile, the techniques of Patent Documents 1 and 2 adopt the curing mechanism that both the first and second stages of cure start with heating. In general, it is difficult to manage the intermediate state of heat cure. In order to acquire the cured state of silicone cured product resulting from the first stage of cure in a reproducible manner, the temperature profile must be strictly managed. The techniques of Patent Documents 1 and 2 are accompanied with a difficulty in actual practice.

On the other hand, the technique of Patent Document 3 has a possibility that since thermal radical cure is conducted after the primary cure via condensation reaction which is generally accompanied with excessive outgases, there occur troubles like cracking by reversion and volatilization of outgases.

### PRIOR ART DOCUMENTS

### PATENT DOCUMENTS

Patent Document 1: WO 2019/088066
Patent Document 2: JP-A 2007-191629
Patent Document 3: WO 2018/186165

### SUMMARY OF INVENTION

### TECHNICAL PROBLEM

An object of the invention, which has been made under the above-mentioned circumstances, is to provide a silicone composition of two-stage cure type wherein the first and second stages of cure are individually and simply manageable.

### SOLUTION TO PROBLEM

Making extensive investigations to solve the outstanding problem, the inventors have found that a composition comprising a (meth)acryloyl-containing organopolysiloxane, an alkenyl-containing organopolysiloxane, and an organohydrogenpolysiloxane in a specific proportion allows for individual and simple management of the first stage of thermo-cure and second stage of photo-cure in the presence of a hydrosilation reaction catalyst and a photopolymerization initiator. The invention is predicated on this finding.

The invention provides the following.
1. A thermo/photo-curable silicone composition comprising
   (A) an organopolysiloxane having at least three (meth)acryloyl groups per molecule,
   (B) an organopolysiloxane having at least two alkenyl groups per molecule and free of a (meth)acryloyl group,
   (C) an organohydrogenpolysiloxane having at least two hydrosilyl groups per molecule,
   (D) a hydrosilation reaction catalyst, and
   (E) a photopolymerization initiator,
   wherein the ratio of the number of (meth)acryloyl groups in component (A) to the number of alkenyl groups in the composition is from 0.9 to 3.0, and the ratio of the number of hydrosilyl groups to the number of alkenyl groups is from 0.8 to 1.2.
2. The thermo/photo-curable silicone composition of 1 wherein component (A) is one or both of (A-i) and (A-ii):
   (A-i) an organopolysiloxane represented by the formula (1): 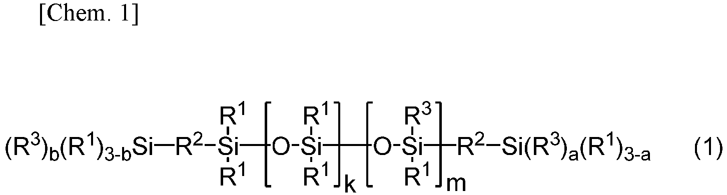 wherein R¹ is each independently a substituted or unsubstituted C₁-C₂₀ alkyl group or substituted or unsubstituted C₆-C₂₀ aryl group, R² is each independently oxygen or a C₁-C₂₀ alkylene group, R³ is each independently an acryloyloxyalkyl, methacryloyloxyalkyl, acryloyloxyalkyloxy or methacryloyloxyalkyloxy group, k is an integer of 0 to 1,000, m is an integer of 0 to 20, a and b are each independently an integer of 0 to 3, a+b+m is an integer of at least 3, the arrangement of siloxane units in the parentheses with k and m is arbitrary,
   (A-ii) an organopolysiloxane represented by the formula (2) and having a number average molecular weight (Mn) of 3,000 to 100,000,

      Aₚ(R¹₃SiO_{1/2})_{q}(SiO_{4/2})ᵣ (2)

      wherein R¹ is as defined above, A is a siloxane unit represented by the formula (3), p, q and r are numbers meeting p > 0, q > 0, r > 0, and p+q+r = 1, 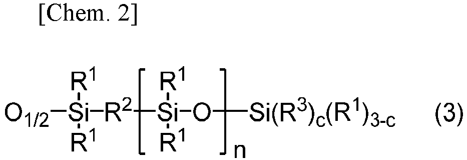 wherein R¹, R² and R³ are as defined above, n is an integer of 0 to 10, and c is an integer of 1 to 3.
3. The thermo/photo-curable silicone composition of 1 wherein component (B) is one or both of (B-iii) and (B-iv):
   (B-iii) a linear organopolysiloxane represented by the formula (4) and having a viscosity at 23°C of 50 to 10,000,000 mPa·s,

      R⁴R¹₂Si(OSiR¹₂)ₛOSiR¹₂R⁴ (4)

      wherein R¹ is as defined above, R⁴ is a C₂-C₂₀ alkenyl group, and s is an integer of 1 to 10,000,
   (B-iv) an organopolysiloxane represented by the formula (5):

      (R¹₃SiO_{1/2})ₜ(R⁴R¹₂SiO_{1/2})ᵤ(SiO_{4/2})ᵥ (5)

      wherein R¹ and R⁴ are as defined above, t, u and v are numbers meeting t > 0, u > 0, v > 0, and t+u+v = 1.
4. The thermo/photo-curable silicone composition of 1 wherein component (C) is a linear organohydrogenpolysiloxane represented by the formula (7):

   (R¹₃SiO_{1/2})_{w}(H_{3-f}R¹_{f}SiO_{1/2})_{2-w}(HR¹₁SiO_{2/2})ₓ(R¹₂SiO_{2/2})_{y} (7)

   wherein R¹ is as defined above, f is 1 or 2, w is an integer meeting 0 ≤ w ≤ 2, x and y are positive integers meeting 2 ≤ x+y ≤ 800 and 0.6 ≤ x/(x+y+2) ≤ 1.0.
5. The thermo/photo-curable silicone composition of 1 wherein component (E) is a photo-radical polymerization initiator free of nitrogen, sulfur and phosphorus.
6. A method of producing a cured product comprising the steps of:
   (α) heating the thermo/photo-curable silicone composition of any one of 1 to 5 to partly cure the composition to a semi-cured state, and
   (β) irradiating UV to the semi-cured composition to cure the composition to completion.

### ADVANTAGEOUS EFFECTS OF INVENTION

The thermo/photo-curable silicone composition is easy in cure control and handling because two stages of cure are induced by different means. That is, the first stage of photo-induced cure can be performed at normal temperature and in a short time because polymerization reaction takes place instantaneously during UV irradiation.
The composition in a semi-cured state after the first stage of cure is easy in handling and experiences little or no change of hardness for a long time in a cold environment, typically during refrigeration, offering a time allowance until the second stage of thermo-induced cure.

The thermo/photo-curable silicone composition having the above-mentioned properties is useful in such applications as adhesive films, optical device encapsulants, and adhesives for electronic equipment members.

### DESCRIPTION OF EMBODIMENTS

Now the invention is described in detail.

The invention provides a thermo/photo-curable silicone composition comprising the following components (A) to (E).

### [1] Component (A)

Component (A) in the thermo/photo-curable silicone composition is an organopolysiloxane having at least 3 (meth)acryloyl groups per molecule, preferably (A-i) or (A-ii) or both. As used herein, "(meth)acryloyl" refers to acryloyl or methacryloyl.

(A-i) Organopolysiloxane represented by the formula (1) 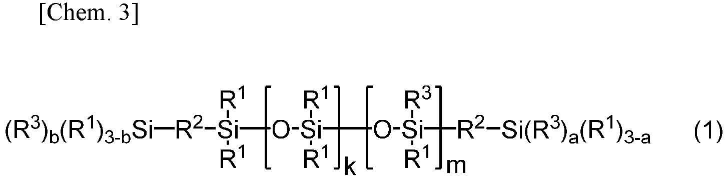 Herein R¹ is each independently a substituted or unsubstituted C₁-C₂₀ alkyl group or substituted or unsubstituted C₆-C₂₀ aryl group, R² is each independently oxygen or a C₁-C₂₀ alkylene group, R³ is each independently an acryloyloxyalkyl, methacryloyloxyalkyl, acryloyloxyalkyloxy or methacryloyloxyalkyloxy group, k is an integer of 0 to 1,000, m is an integer of 0 to 20, a and b are each independently an integer of 0 to 3, a+b+m is an integer of at least 3. The arrangement of siloxane units in the parentheses with k and m is arbitrary.
(A-ii) Organopolysiloxane represented by the formula (2) and having a number average molecular weight (Mn) of 3,000 to 100,000

   Aₚ(R¹₃SiO_{1/2})_{q}(SiO_{4/2})ᵣ (2)

Herein R¹ is as defined above, A is a siloxane unit represented by the formula (3), p, q and r are numbers meeting p > 0, q > 0, r > 0, and p+q+r = 1.

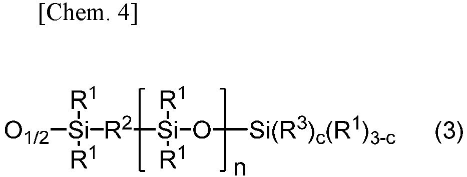

Herein R¹, R² and R³ are as defined above, n is an integer of 0 to 10, and c is an integer of 1 to 3.

The C₁-C₂₀, preferably C₁-C₁₀ alkyl group R¹ may be straight, branched or cyclic, and examples thereof include methyl, ethyl, n-propyl, isopropyl, n-butyl, isobutyl, tert-butyl, n-hexyl, cyclohexyl, n-octyl, 2-ethylhexyl, and n-decyl.

Examples of the C₆-C₂₀, preferably C₆-C₁₀ aryl group R¹ include phenyl, tolyl, xylyl, and naphthyl.

In these groups, some or all of the carbon-bonded hydrogen atoms may be substituted by another substituent. Examples of the substituted groups include halogen- and cyano-substituted hydrocarbon groups such as chloromethyl, bromoethyl, trifluoropropyl and cyanoethyl.

Inter alia, R¹ is preferably a C₁-C₅ alkyl group or phenyl, and more preferably methyl, ethyl or phenyl.

The C₁-C₂₀ alkylene group R² may be straight, branched or cyclic, and examples thereof include methylene, ethylene, propylene, trimethylene, tetramethylene, isobutylene, pentamethylene, hexamethylene, heptamethylene, octamethylene, and nonamethylene.

Inter alia, R² is preferably oxygen, methylene, ethylene or trimethylene, and more preferably oxygen or ethylene.

Examples of R³ are shown below, but not limited thereto.

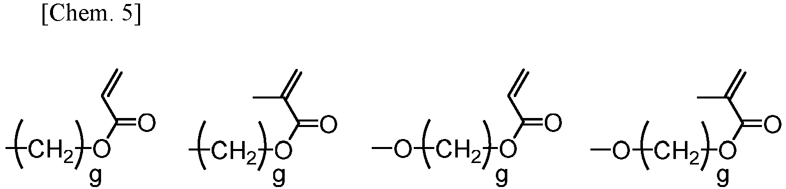

Herein g is an integer of 1 to 4.

In formula (1), a and b each are an integer of 0 to 3, and the sum of a, b and m, i.e., (a+b+m) is 3 or more. If (a+b+m) is less than 3, there is a possibility that photo-induced cure reaction scarcely takes place and the silicone cured product has an insufficient hardness. It is especially preferred that a=b=2 and m=4.

The subscript k is an integer of 0 to 1,000. A value of k in excess of 1,000 may lead to poor polymerization. It is preferred in view of low volatility and polymerization of component (A-i) that k be an integer of 30 to 500, more preferably an integer of 50 to 400.

The subscript m is an integer of 0 to 20, preferably an integer of 0 to 10, more preferably 0. If m exceeds 20, the composition may become white turbid upon curing.

In formula (2), p, q and r are numbers meeting p > 0, q > 0, r > 0, and p+q+r = 1. It is preferred in view of handling of the composition and the hardness of the silicone cured product that p be a number of 0.05 to 0.07, q be a number of 0.33 to 0.35, and r be a number of 0.58 to 0.62.

Component (A-ii) has a number average molecular weight (Mn) in the range of 3,000 to 100,000, preferably 5,000 to 10,000. If Mn is less than 3,000, there is a risk that the number of (meth)acryloyl groups per molecule be less than 3, and the silicone cured product obtained after two stages of cure have an insufficient hardness. If Mn exceeds 100,000, there is a risk that component (A-ii) be less compatible.

It is noted that Mn is as measured by gel permeation chromatography (GPC) versus polystyrene standards using tetrahydrofuran (THF) as developing solvent.

Component (A) may be used alone or in admixture of two or more.

Since component (A-ii) is sometimes solid in the service environment, it may be used after it is dissolved in component (A-i) or a liquid organic compound containing a (meth)acryloyl group.

The overall component (A) has a viscosity at 23°C of preferably up to 100,000 mPa·s (typically 1 to 100,000 mPa·s), more preferably up to 10,000 mPa·s (for example, 5 to 10,000 mPa·s) in view of handling.

It is noted that the viscosity is measured by a Brookfield rotational viscometer.

### [2] Component (B)

In the thermo/photo-curable silicone composition, component (B) is an organopolysiloxane having at least two alkenyl groups per molecule and free of a (meth)acryloyl group, preferably component (B-iii) or (B-iv) below or both.

(B-iii) a linear organopolysiloxane represented by the formula (4) and having a viscosity at 23°C of 50 to 10,000,000 mPa·s,

   R⁴R¹₂Si(OSiR¹₂)ₛOSiR¹₂R⁴ (4)

   wherein R¹ is as defined above, R⁴ is a C₂-C₂₀ alkenyl group, and s is an integer of 1 to 10,000,
(B-iv) an organopolysiloxane represented by the formula (5):

   (R¹₃SiO_{1/2})ₜ(R⁴R¹₂SiO_{1/2})ᵤ(SiO_{4/2})ᵥ (5)

   wherein R¹ and R⁴ are as defined above, t, u and v are numbers meeting t > 0, u > 0, v > 0, and t+u+v = 1.

In formula (4), R¹ is as exemplified above in conjunction with formula (1), preferably methyl or phenyl.

The C₂-C₂₀ alkenyl group R⁴ may be straight, branched or cyclic, and examples thereof include vinyl, allyl, butenyl, pentenyl, hexenyl and octenyl, with vinyl being preferred.

The subscript s is an integer of 1 to 10,000, preferably 100 to 1,000.

Component (B-iii) has a viscosity at 23°C of 50 to 10,000,000 mPa·s, preferably 100 to 100,000 mPa·s.

In formula (5), R¹ is as exemplified above in conjunction with formula (1), preferably methyl or phenyl.

The C₂-C₂₀ alkylene group R⁴ may be straight, branched or cyclic, and examples thereof include vinyl, allyl, butenyl, pentenyl, hexenyl and octenyl, with vinyl being preferred.

The subscripts t, u and v are numbers meeting t > 0, u > 0, v > 0, and t+u+v = 1. It is preferred in view of curability and the hardness of a cured product that (t+u)/v be from 0.3 to 2.0, more preferably from 0.5 to 1.0.

Component (B-iv) has a number average molecular weight (Mn) in the range of 500 to 500,000, preferably 1,000 to 100,000. If Mn is less than 500, there is a risk that the number of alkenyl groups per molecule be less than 2, and the silicone cured product obtained after two stages of cure have an insufficient hardness. If Mn exceeds 500,000, there is a risk that component (B-iv) be less compatible.

Component (B) may be used alone or in admixture of two or more.

Since component (B-iv) is sometimes solid in the service environment, it may be used after it is dissolved in component (B-iii).

The overall component (B) has a viscosity at 23°C of preferably up to 100,000 mPa·s (typically 1 to 100,000 mPa·s), more preferably up to 10,000 mPa·s (for example, 5 to 10,000 mPa·s) in view of handling.

Component (B) is blended in such an amount that the ratio of the number of (meth)acryloyl groups in component (A) to the number of alkenyl groups in the composition may be from 0.9 to 3.0. If the ratio is less than 0.9, there is a possibility that the second stage of cure be insufficient. If the ratio exceeds 3.0, indicating a too small amount of alkenyl groups, there is a possibility that the first stage of cure be insufficient.

### [3] Component (C)

Component (C) is an organohydrogenpolysiloxane having at least two hydrosilyl groups per molecule, specifically one having the average compositional formula (6):

R¹_{d}HₑSiO_{(4-d-e)/2} (6)

wherein R¹ is as defined above, d is a number of 0.7 to 2.1, e is a number of 0.001 to 1.0, meeting 0.8 ≤ d+e ≤ 3.0.

In formula (6), d is preferably a number of 1.0 to 1.8, e is preferably a number of 0.1 to 1, and d+e is preferably 1 ≤ d+e ≤ 2.4, more preferably 1.6 ≤ d+e ≤ 2.2. Within the ranges, foaming upon curing is inhibited, and the resulting cured product has a more improved hardness and experiences a least change of hardness with time.

Component (C) is preferably a linear organohydrogenpolysiloxane represented by the formula (7).

(R¹₃SiO_{1/2})_{w}(H_{3-f}R¹_{f}SiO_{1/2})_{2-w}(HR¹₁SiO_{2/2})ₓ(R¹₂SiO_{2/2})_{y} (7)

In formula (7), R¹ is as exemplified above in conjunction with formula (1), preferably methyl.

The subscript f is 1 or 2, preferably 2.

The subscript w is an integer meeting 0 ≤ w ≤ 2, preferably 0 or 2, more preferably 2.

The subscript x and y are positive integers meeting 2 ≤ x+y ≤ 800 and 0.6 ≤ x/(x+y+2) ≤ 1.0, preferably x and y are positive integers meeting 7 ≤ x+y ≤ 700 and 0.7 ≤ x/(x+y+2) ≤ 0.9.

Component (C) preferably has a kinematic viscosity at 23°C of 0.5 to 200 mm²/s, more preferably 1 to 50 mm²/s. As used herein, the kinematic viscosity is measured by a Cannon-Fenske viscometer.

Component (C) may be used alone or in admixture of two or more.

Component (C) is blended in such an amount that the ratio of the number of hydrosilyl groups to the number of alkenyl groups may range from 0.8 to 1.2, preferably from 0.9 to 1.1. If the ratio is less than 0.8, there is a possibility that the first stage of cure be insufficient and the hardness of a cured product be low. If the ratio exceeds 1.2, there is a possibility that the first stage of cure reach a too high hardness and no merits be obtained from the two stages of cure.

### [4] Component (D)

Component (D) is a hydrosilation reaction catalyst for promoting addition reaction of alkenyl groups in components (A) and (B) with Si-H groups in component (C).

Exemplary of the catalyst are platinum group metal-based catalysts including platinum-based catalysts such as metallic platinum on carbon powder, platinum black, platinic chloride, chloroplatinic acid, the reaction products of chloroplatinic acid with monohydric alcohols, complexes of platinum with vinylsiloxanes such as divinyltetramethyldisiloxane, complexes of chloroplatinic acid with olefins, and platinum bisacetoacetate, palladium-based catalysts, and rhodium-based catalysts. Of these, platinum-based catalysts are preferred from the aspect of reactivity, and complexes of platinum with vinylsiloxanes are more preferred.

The amount of component (D) blended is not limited as long as hydrosilation reaction is promoted. The amount of component (D) is preferably set so as to give 0.01 to 500 ppm, more preferably 0.05 to 100 ppm, even more preferably 0.01 to 50 ppm by weight of metal in component (D) based on the total weight of components (A), (B) and (C).

### [5] Component (E)

Component (E) is a photopolymerization initiator which generates organic radical species upon absorption of UV from which polymerization reaction of (meth)acryloyl groups starts. The photopolymerization initiator as component (E) should preferably be free of nitrogen, sulfur and phosphorus so that the addition reaction as the first stage of the curing mechanism may not be inhibited.

Examples of the photopolymerization initiator include 2,2-diethoxyacetophenone, 2,2-dimethoxy-1,2-diphenylethan-1-one (Omnirad 651 by IGM Resins B.V.), 1-hydroxycyclohexyl phenyl ketone (Omnirad 184 by IGM Resins B.V.), 2-hydroxy-2-methyl-1-phenylpropan-1-one (Omnirad 1173 by IGM Resins B.V.), 2-hydroxy-1-{4-[4-(2-hydroxy-2-methylpropionyl)benzyl]phenyl}-2-methylpropan-1-one (Omnirad 127 by IGM Resins B.V.), and methylbenzoylformate (Omnirad MBF by IGM Resins B.V.).

Of these, 2,2-diethoxyacetophenone and 2-hydroxy-2-methyl-1-phenylpropan-1-one (Omnirad 1173 by IGM Resins B.V.) are preferred from the aspect of compatibility between components (A) and (B).

Component (E) may be used alone or in admixture of two or more.

The amount of component (E) added is preferably in a range of 0.01 to 20% by weight based on the total weight of components (A), (B) and (C). The range of component (E) ensures satisfactory curability and efficient deep-section cure.

### [6] Other components

In addition to the foregoing components (A) to (E), the thermo/photo-curable silicone composition may contain other components as long as the purpose of the invention is not impaired.

Exemplary other components include reaction inhibitors for controlling the reactivity of the platinum catalyst such as 3-methyl-1-butyn-3-ol and ethynyl methyl decyl carbinol; adhesive aids having an adhesion-imparting group such as carbonyl, epoxy or alkoxysilyl group; thixotropy controlling agents such as fumed silica; reinforcements such as crystalline silica; antioxidants; photo-stabilizers; heat resistance improvers such as metal oxides and metal hydroxides; pigments such as titanium oxide; dyes; heat conductive fillers such as alumina; viscosity modifiers such as non-reactive silicone oil free of a reactive functional group; and electroconductive agents such as powders of metals like silver and gold.

The thermo/photo-curable silicone composition may be prepared by mixing components (A) to (E) and optional other components as mentioned above in a well-known way.

The composition may be prepared as a one-part composition or by dividing the components into two or more parts and mixing the parts in an arbitrary ratio on use.

Another embodiment of the invention is a method of producing a cured product of the thermo/photo-curable silicone composition comprising the steps of:
(α) heating the thermo/photo-curable silicone composition to partly cure the composition to a semi-cured state, and
(β) irradiating UV to the semi-cured composition to cure the composition to completion.

The heating conditions in step (α) are preferably in an environment at 50 to 150°C, more preferably 80 to 120°C for 10 minutes to 1 day, more preferably 30 minutes to 1 hour.

The UV irradiated in step (β) is preferably radiation of wavelength 200 to 500 nm, more preferably 200 to 350 nm. From the aspect of preventing discoloration, the irradiation step is preferably carried out at a temperature of 20 to 40°C, an intensity of 30 to 2,000 mW/cm², and a dose of 150 to 100,000 mJ/cm².

As the light source of UV, 365-nm UV LED lamps, metal halide lamps, and high-pressure mercury lamps may be used. The UV irradiation method is by irradiating a suitable amount of UV to the composition. When irradiation is carried out on a transparent substrate such as glass or resin film, UV may be irradiated through the glass or film. UV irradiation is preferably carried out in a nitrogen or argon atmosphere in order to avoid the cure inhibition influence of oxygen.

### EXAMPLES

Examples and Comparative Examples are given below by way of illustration, but the invention is not limited thereto.

Herein, the viscosity at 23°C is measured by a Brookfield rotational viscometer, and the kinematic viscosity at 23°C is measured by a Cannon-Fenske viscometer. Vi stands for vinyl and Me stands for methyl.

### [1] Preparation of thermo/photo-curable silicone composition

### [Examples 1-1 to 1-6 and Comparative Examples 1-1 to 1-5]

Thermo/photo-curable silicone compositions were prepared by mixing components (A) to (E) and other components as shown below in the blending amounts (parts by weight) shown in Tables 1 and 2.

Component (A)
   (A-i-1): organopolysiloxane represented by the formula (8) (having a viscosity at 23°C of 3,000 mPa·s and an acryloyl content of 0.02 mol/100 g) 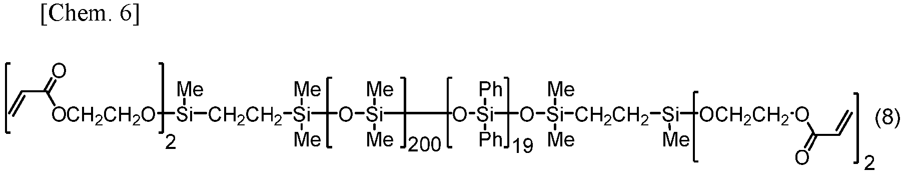 The arrangement of siloxane units in parentheses may be either random or blockwise.
   (A-ii-1): organopolysiloxane represented by the formula (9) wherein the molar ratio of (siloxane units)/(ViMe₂SiO_{1/2} units)/(Me₃SiO_{1/2} units)/(SiO₂ units) is 0.056/0.014/0.390/0.540 (having a Mn of 5,700, an average number of methacryloyl groups per molecule of 3.7, a methacryloyl content of 0.0656 mol/100 g, and a vinyl content of 0.0164 mol/100 g) 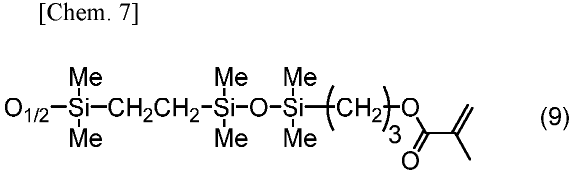
   (A-ii-2): organopolysiloxane represented by the above formula (9) wherein the molar ratio of (siloxane units)/(ViMe₂SiO_{1/2} units)/(Me₃SiO_{1/2} units)/(SiO₂ units) is 0.072/0.054/0.334/0.540 (having a Mn of 5,400, an average number of methacryloyl groups per molecule of 4.3, a methacryloyl content of 0.0794 mol/100 g, and a vinyl content of 0.0596 mol/100 g)
Component (B)
   (B-iii-1): organopolysiloxane represented by the formula (10) (having a viscosity at 23°C of 3,000 mPa·s and a vinyl content of 0.01 mol/100 g) 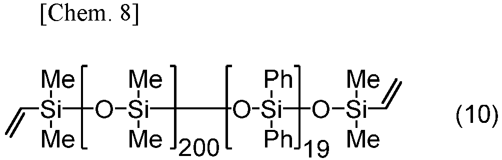 The arrangement of siloxane units in parentheses may be either random or blockwise.
   (B-iv-1): organopolysiloxane represented by the average formula (11) (having a Mn of 4,500, an average number of vinyl groups per molecule of 3.7, and a vinyl content of 0.082 mol/100 g)

      (ViMe₂SiO_{1/2})_{0.058}(Me₃SiO_{1/2})_{0.402}(SiO_{4/2})_{0.540} (11)
Component (C)
   (C-1): organohydrogenpolysiloxane represented by the formula (12) (having a kinematic viscosity at 23°C of 44.7 mm²/s and a silicon-bonded hydrogen content of 0.0113 mol/g) 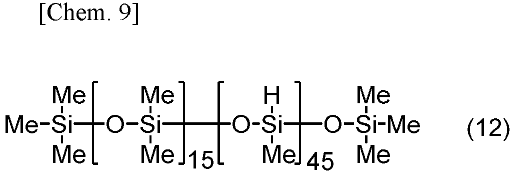 The arrangement of siloxane units in parentheses may be either random or blockwise.
Component (D)
   (D-1): toluene solution of platinum 1,3-divinyl-1,1,3,3-tetramethyldisiloxane complex (Pt content 0.5 wt%)
Component (E)
   (E-1): 2-hydroxy-2-methyl-1-phenylpropan-1-one (Omnirad 1173 by IGM Resins B.V.)

### (Other components)

| | |
|---|---|
| Reaction inhibitor: | ethynyl methyl decyl carbinol |
| Diluent: | disiloxane compound represented by the structural formula (13) |

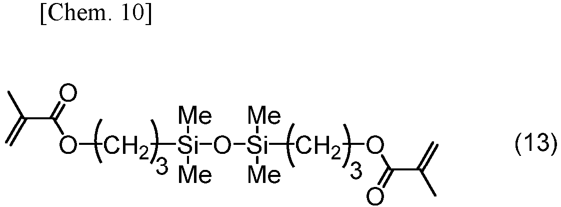

**[Table 1]**

| Example | 1-1 | 1-2 | 1-3 | 1-4 | 1-5 | 1-6 |
|---|---|---|---|---|---|---|
| (A-i-1) | 50 | 80 | | | | 40 |
| (A-ii-1) | | | 31 | 31 | 47 | |
| (A-ii-2) | | | | | | 40 |
| (B-iii-1) | 50 | 10 | 38 | 19 | 3 | 10 |
| (B-iv-1) | | 10 | | 19 | 3 | 10 |
| (C-1) | 0.5 | 0.9 | 0.9 | 2 | 0.9 | 3 |
| (D-1) | 1 | 1 | 1 | 1 | 1 | 1 |
| (E-1) | 0.2 | 0.2 | 0.2 | 0.2 | 0.2 | 0.2 |
| Reaction inhibitor | 0.1 | 0.1 | 0.1 | 0.1 | 0.1 | 0.1 |
| Diluent | | | 31 | 31 | 47 | |
| Number ratio of [(meth)acryloyl groups in (A)]/[alkenyl groups in composition] | 2.0 | 1.7 | 2.3 | 0.9 | 2.9 | 1.2 |
| Number ratio of (Si-H groups)/(alkenyl groups) | 1.1 | 1.1 | 1.2 | 1.0 | 1.0 | 1.0 |

**[Table 2]**

| Comparative Example | 1-1 | 1-2 | 1-3 | 1-4 | 1-5 |
|---|---|---|---|---|---|
| (A-i-1) | 80 | 20 | | 20 | 12.5 |
| (A-ii-1) | | | 48.5 | | |
| (A-ii-2) | | | | 20 | 12.5 |
| (B-iii-1) | 20 | 40 | 1.5 | 30 | 75 |
| (B-iv-1) | | 40 | 1.5 | 30 | |
| (C-1) | 0.2 | 3.4 | 0.9 | 3.6 | 1.3 |
| (D-1) | 1 | 1 | 1 | 1 | 1 |
| (E-1) | 0.2 | 0.2 | 0.2 | 0.2 | 0.2 |
| Reaction inhibitor | 0.1 | 0.1 | 0.1 | 0.1 | 0.1 |
| Diluent | | | 48.5 | | |
| Number ratio of [(meth)acryloyl groups in (A)]/[alkenyl groups in composition] | 8.0 | 0.1 | 3.4 | 0.4 | 0.8 |
| Number ratio of (Si-H groups)/(alkenyl groups) | 1.1 | 1.0 | 1.1 | 1.0 | 1.0 |

### [2] Preparation of cured product of thermo/photo-curable silicone composition

### [Examples 2-1 to 2-6 and Comparative Examples 2-1 to 2-6]

The thermo/photo-curable silicone compositions obtained in Examples 1-1 to 1-6 and Comparative Examples 1-1 to 1-5 were allowed to stand at 120°C for 1 hour to carry out the first stage of cure. Once the cured products were cooled at 25°C, they were measured for penetration or Durometer Type A hardness according to JIS K-6249 by a penetrometer (1/4 cone) by Rigo Co., Ltd. or Durometer A hardness meter. When the penetration of a sample was less than 1 and thus unmeasurable, Durometer A hardness was used.

Subsequently, using a UV-LED lamp of wavelength 365 nm, the cured product resulting from the first stage of cure was irradiated with UV in a nitrogen environment at 25°C, at an irradiation intensity of 100 mW/cm² and a dose of 3,000 mJ/cm² to carry out the second stage of cure. Like the cured product of the first stage, the cured product was measured for hardness. The results are shown in Tables 3 and 4.

**[Table 3]**

| Example | 2-1 | 2-2 | 2-3 | 2-4 | 2-5 | 2-6 |
|---|---|---|---|---|---|---|
| Composition | Example | | | | | |
| | 1-1 | 1-2 | 1-3 | 1-4 | 1-5 | 1-6 |
| Hardness after 1st stage of cure | penetration 65 | penetration 30 | Type-A 3 | Type-A 18 | penetration 66 | Type-A 28 |
| Hardness after 2nd stage of cure | penetration 8 | Type-A 50 | Type-A 62 | Type-A 92 | Type-A 90 | Type-A 60 |
| Hardness difference | 57 (penetration) | >30 (penetration) | 59 (Type-A) | 74 (Type-A) | >66 (penetration) | 32 (Type-A) |

**[Table 4]**

| Comparative Example | 2-1 | 2-2 | 2-3 | 2-4 | 2-5 |
|---|---|---|---|---|---|
| Composition | Comparative Example | | | | |
| | 1-1 | 1-2 | 1-3 | 1-4 | 1-5 |
| Hardness after 1st stage of cure | uncurable | Type-A 39 | uncurable | Type-A 42 | Type-A 22 |
| Hardness after 2nd stage of cure | - | Type-A 41 | - | Type-A 58 | Type-A 37 |
| Hardness difference | - | 2 (Type-A) | - | 16 (Type-A) | 15 (Type-A) |

As seen from Tables 3 and 4, the thermo/photo-curable silicone compositions prepared in Examples 1-1 to 1-6 show a large difference in hardness between the first stage of heat cure and the second stage of photo-cure.

In contrast, when the compositions of Comparative Examples 1-1 and 1-3 wherein the number ratio of [(meth)acryloyl groups in (A)]/[alkenyl groups in composition] is more than 3.0 were used, the first stage of heat cure did not take place. When the compositions of Comparative Examples 1-2, 1-4 and 1-5 wherein the number ratio of [(meth)acryloyl groups in (A)]/[alkenyl groups in composition] is less than 0.9 were used, the first stage of heat cure took place to such an excessive extent that little difference was found in hardness between the first and second stages. These compositions are not two-stage cure materials.

## Claims

1. A thermo/photo-curable silicone composition comprising
(A) an organopolysiloxane having at least three (meth)acryloyl groups per molecule,
(B) an organopolysiloxane having at least two alkenyl groups per molecule and free of a (meth)acryloyl group,
(C) an organohydrogenpolysiloxane having at least two hydrosilyl groups per molecule,
(D) a hydrosilation reaction catalyst, and
(E) a photopolymerization initiator,
wherein the ratio of the number of (meth)acryloyl groups in component (A) to the number of alkenyl groups in the composition is from 0.9 to 3.0, and the ratio of the number of hydrosilyl groups to the number of alkenyl groups is from 0.8 to 1.2.

2. The thermo/photo-curable silicone composition of claim 1 wherein component (A) is one or both of (A-i) and (A-ii):
(A-i) an organopolysiloxane represented by the formula (1): 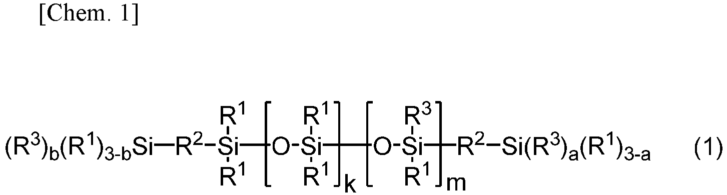 wherein R¹ is each independently a substituted or unsubstituted C₁-C₂₀ alkyl group or substituted or unsubstituted C₆-C₂₀ aryl group, R² is each independently oxygen or a C₁-C₂₀ alkylene group, R³ is each independently an acryloyloxyalkyl, methacryloyloxyalkyl, acryloyloxyalkyloxy or methacryloyloxyalkyloxy group, k is an integer of 0 to 1,000, m is an integer of 0 to 20, a and b are each independently an integer of 0 to 3, a+b+m is an integer of at least 3, the arrangement of siloxane units in the parentheses with k and m is arbitrary,
(A-ii) an organopolysiloxane represented by the formula (2) and having a number average molecular weight (Mn) of 3,000 to 100,000,
Aₚ(R¹₃SiO_{1/2})_{q}(SiO_{4/2})ᵣ (2)
wherein R¹ is as defined above, A is a siloxane unit represented by the formula (3), p, q and r are numbers meeting p > 0, q > 0, r > 0, and p+q+r = 1, 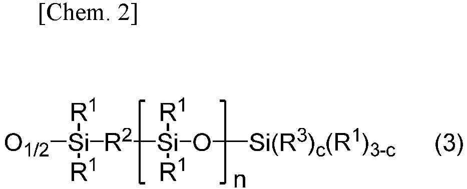 wherein R¹, R² and R³ are as defined above, n is an integer of 0 to 10, and c is an integer of 1 to 3.

3. The thermo/photo-curable silicone composition of claim 1 wherein component (B) is one or both of (B-iii) and (B-iv):
(B-iii) a linear organopolysiloxane represented by the formula (4) and having a viscosity at 23°C of 50 to 10,000,000 mPa·s,
R⁴R¹₂Si(OSiR¹₂)ₛOSiR¹₂R⁴ (4)
wherein R¹ is as defined above, R⁴ is a C₂-C₂₀ alkenyl group, and s is an integer of 1 to 10,000,
(B-iv) an organopolysiloxane represented by the formula (5):
(R¹₃SiO_{1/2})ₜ(R⁴R¹₂SiO_{1/2})ᵤ(SiO_{4/2})ᵥ (5)
wherein R¹ and R⁴ are as defined above, t, u and v are numbers meeting t > 0, u > 0, v > 0, and t+u+v = 1.

4. The thermo/photo-curable silicone composition of claim 1 wherein component (C) is a linear organohydrogenpolysiloxane represented by the formula (7):
(R¹₃SiO_{1/2})_{w}(H_{3-f}R¹_{f}SiO_{1/2})_{2-w}(HR¹₁SiO_{2/2})ₓ(R¹₂SiO_{2/2})_{y} (7)
wherein R¹ is as defined above, f is 1 or 2, w is an integer meeting 0 ≤ w ≤ 2, x and y are positive integers meeting 2 ≤ x+y ≤ 800 and 0.6 ≤ x/(x+y+2) ≤ 1.0.

5. The thermo/photo-curable silicone composition of claim 1 wherein component (E) is a photo-radical polymerization initiator free of nitrogen, sulfur and phosphorus.

6. A method of producing a cured product comprising the steps of:
(α) heating the thermo/photo-curable silicone composition of any one of claims 1 to 5 to partly cure the composition to a semi-cured state, and
(β) irradiating UV to the semi-cured composition to cure the composition to completion.
